# FASCICULE DE BREVET EUROPEEN

(11) **EP 1 460 553 B1**
(45) Date de publication et mention de la délivrance du brevet: **02.01.2008**
(21) Numéro de dépôt: 04290672.7
(22) Date de dépôt: 11.03.2004
(51) Int. Cl.: G06F 13/42, H04L 29/06

(54) **Système de commande de l'état de veille/réveil d'un réseau multiplexé de transmission d'informations**
System um den Ruhe-/Aufwachungszustand eines multiplexierten Datenübertragungsnetzwerks zu steuern
System for controlling the standby-/wakeup state of a multiplexed data transmission network

(30) Priorité: 21.03.2003 FR 0303507
(43) Date de publication de la demande: 22.09.2004
(73) Titulaire: Peugeot Citroën Automobiles S.A., 78140 Vélizy Villacoublay (FR)
(72) Inventeur: Dequi, Eric, 92150 Suresnes (FR); Harrar, Ahmed, 95100 Argenteuil (FR)
(74) Mandataire: Habasque, Etienne J. Jean-François

(56) Documents cités:
- EP-A- 1 085 721
- US-A- 5 574 848
- BOSCH: "CAN Specification version 2.0" 31 décembre 1991 (1991-12-31), , XP002156917 Extrait de l'Internet: URL:http://www.infineon.com/cmc_upload/mig rated_files/document_files/Appl ication_Not> [extrait le 2001-01-10] * le document en entier *

## Description

La présente invention concerne un système de commande de l'état de veille/réveil d'un réseau multiplexé notamment de véhicule automobile, de transmission d'informations et de raccordement de stations dont l'une est une station de gestion de l'état du réseau et donc des autres stations.

Les réseaux de ce type peuvent par exemple être des réseaux multiplexés du type CAN à faible vitesse, également connus sous l'expression anglaise "CAN LOW SPEED". Un tel réseau est divulgué par le document "can specification, version 2.0".

Dans ce type de réseaux, il se pose notamment des problèmes de passage en état de veille ou en état de réveil, de façon synchronisée, des différentes stations et équipements connectés à ce réseau.

En effet, cette synchronisation est importante pour éviter tous problèmes par exemple de pertes de données.

Le but de l'invention est donc de résoudre ces problèmes.

A cet effet, l'invention a pour objet un système de commande de l'état de veille/réveil d'un réseau multiplexé notamment de véhicule automobile, de transmission d'informations et de raccordement de stations dont l'une est une station de gestion de l'état du réseau et donc des autres stations, caractérisé en ce qu'en réponse à la détection d'une requête de réveil de la station de gestion du réseau et à la fin de sa période d'initialisation, la station de gestion est adaptée pour émettre périodiquement sur le réseau un message de réveil du réseau jusqu'à la réception par cette station, d'un premier acquittement de protocole de ce message, d'une station connectée à ce réseau, puis une trame d'état de réveil du réseau jusqu'à l'expiration d'une période de temps prédéterminée après la première émission du message de réveil, puis une trame d'état de fonctionnement normal du réseau.

Suivant d'autres caractéristiques :
- à la détection de conditions de mise en veille du réseau, la station de gestion est adaptée pour émettre périodiquement sur le réseau, une trame d'état de mise en veille du réseau, puis une trame d'état de veille et à l'expiration d'une période de temps déterminée après cette trame d'état de veille, pour couper l'alimentation des stations raccordées au réseau.

L'invention sera mieux comprise à la lecture de la description qui va suivre, donnée uniquement à titre d'exemple et faite en se référant aux dessins annexés, sur lesquels :
- la Fig.1 représente un schéma synoptique illustrant la structure générale d'un réseau multiplexé de transmission d'informations;
- la Fig.2 représente un graphe d'état d'un tel réseau;
- la Fig.3 illustre le fonctionnement d'un tel réseau lors d'un réveil de celui-ci par une station de ce réseau;
- la Fig.4 illustre le réveil de ce réseau par une station de gestion de celui-ci; et
- la Fig.5 illustre la mise en veille d'un tel réseau.

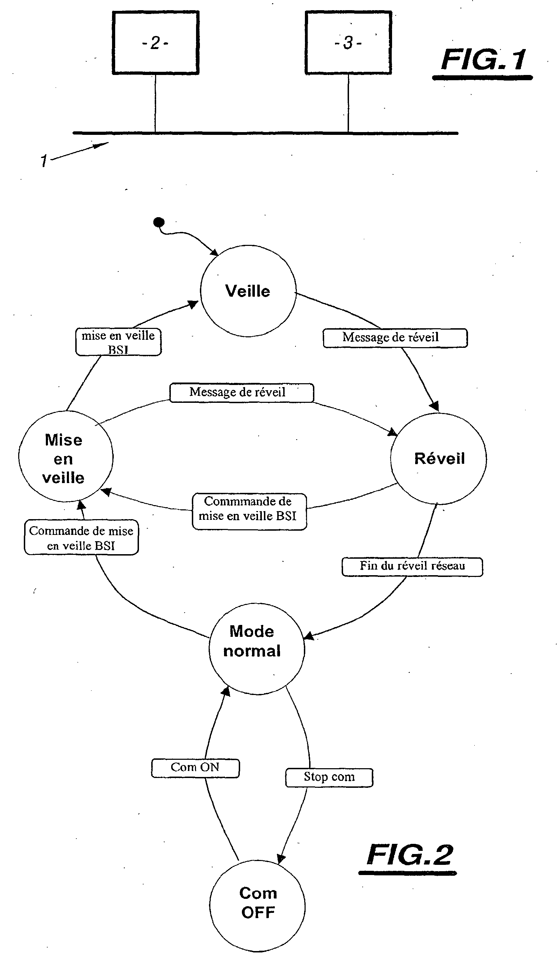

On a en effet illustré sur la figure 1, la structure générale d'un réseau multiplexé de transmission d'informations et de raccordement de stations entre elles, notamment pour véhicule automobile.

Sur cette figure 1, le réseau de transmission ou bus est désigné par la référence générale 1, tandis que deux stations sont représentées et sont désignées par les références générales 2 et 3.

L'une de ces stations, par exemple la station 2, est une station de gestion de l'état du réseau et donc des autres stations raccordées au réseau.

Cette station est par exemple une station de type BSI pour boîtier de servitude intelligent, intégrée dans un véhicule.

Ce réseau et donc les stations qui y sont connectées, peuvent se trouver dans l'un de cinq états, parmi lesquels un état de veille, un état de réveil, un état de mode de fonctionnement normal, un état de mise en veille et un état d'interruption de communication, également appelé COM OFF, comme cela est illustré sur la figure 2.

Les états de réveil et de mise en veille sont des états transitoires des stations du réseau et ces états et les transitions correspondantes sont gérés par la station de gestion BSI.

Les tableaux suivants décrivent les états et les transitions correspondantes.
**Description des états du réseau :**

| **Description** |
|---|
| Etat *Veille :* |
| Pas de communication sur le réseau. |
| Les fonctions nécessitant des échanges d'information via le réseau sont désactivées. |
| Les organes sont en attente d'un message de réveil ou d'un événement extérieur |
| Etat *Réveil :* |
| Phase pendant laquelle les organes initialisent leur gestionnaire de communication. |
| Pas de supervision réseau |
| Surveillance de la trame *Commandes_BSI.* |
| Pas de trame de supervision CAN LS |
| Dans le cas du réveil sélectif : Seuls les messages fonctionnels nécessaires sont émis. |
| Etat Mode Normal : |
| Etat de fonctionnement normal. |
| Toutes les fonctions sont activées ou en cours d'initialisation. |
| L'émission de la trame de réveil est interrompue. |
| Diagnostic autorisé. |
| Etat *Com OFF :* |
| L'émission des messages fonctionnels est stoppée. |
| Ce mode permet un téléchargement rapide des calculateurs. |
| Etat Mise en veille : |
| Phase intermédiaire pendant laquelle les organes attendent la demande de veille du BSI. |
| Les organes ne communiquent plus. |
| Cette phase permet éventuellement la sauvegarde de paramètres. |

**Description des transitions :**

| **Description** |
|---|
| Transition : Message de *Réveil* |
| Message de réveil émis par un organe pour demander le réveil du réseau quand le réseau est en MISE EN VEILLE ou en VEILLE |
| Transition : Fin du réveil réseau |
| Passage de REVEIL à MODE NORMAL de la donnée *Phase_vie* du message *Commandes BSI* |
| Transition : Commande de mise en veille BSI |
| Passage de MODE NORMAL ou REVEIL à MISE EN VEILLE de la donnée |
| *Phase_vie* du message *Commandes BSI* |
| Transition : Comande de V*eille BSI* |
| Passage de MISE EN VEILLE à VEILLE de la donnée *Phase_vie* du message *Commandes BSI* |
| Transition *Stop COM :* |
| Passage de NORMAL à COM_OFF de la donnée *Phase_vie* du message |
| *Commandes_BSI* |
| Transition *Com ON :* |
| Passage de COM_OFF à NORMAL de la donnée *Phase_vie* du message |
| *Commandes BSI* |

Il existe deux types de réveil possibles d'un tel réseau, à savoir un réveil du réseau par la station de gestion de celui-ci, par exemple la BSI et un réveil du réseau par une autre station raccordée au réseau.

Dans le cas d'un réveil initié par la station de gestion BSI, lorsqu'un événement externe à cette station de gestion déclenche le réveil de celle-ci, cette station de gestion s'initialise pendant une période de temps prédéterminée, puis diffuse une trame de commande d'état de réveil également connue sous le nom de commande_BSI, dans laquelle le drapeau d'état de réseau est positionné sur réveil.

Au bout d'une période de temps correspondant au réveil du réseau, le drapeau d'état de réseau de cette trame est positionné à l'état de fonctionnement normal.

Les autres stations raccordées au réseau peuvent alors démarrer leur communication et valider leur fonction.

Dans le cas d'un réveil du réseau par une autre station, cette station envoie une trame de réveil sur le réseau qui est détectée par la station de gestion BSI.

Celle-ci s'initialise alors pendant une période de temps prédéterminée puis diffuse une trame de commande_BSI dans laquelle le drapeau d'état de réseau est positionné sur réveil.

Au bout d'une période de temps de réveil du réseau, le drapeau d'état de réseau est positionné sur l'état de fonctionnement normal et les calculateurs peuvent alors démarrer leur communication.

La mise en veille est basée quant à elle sur l'émission d'une trame de commande_BSI par la station de gestion du réseau BSI dans laquelle un drapeau d'état du réseau indique l'état dans lequel toutes les stations doivent se trouver simultanément.

Ce processus de mise en veille se déroule en deux étapes, à savoir :
1) lorsque la station de gestion décide de passer en mode de veille du réseau, elle positionne le drapeau d'état de réseau à l'état mise en veille, pendant une première période de temps.
   Toutes les stations doivent alors stopper leur communication et le fonctionnel du véhicule s'arrête.
2) au bout d'une seconde période de temps, cette station positionne le drapeau d'état du réseau à l'état de veille. Tous les calculateurs doivent alors passer en veille et réduire leur consommation électrique.

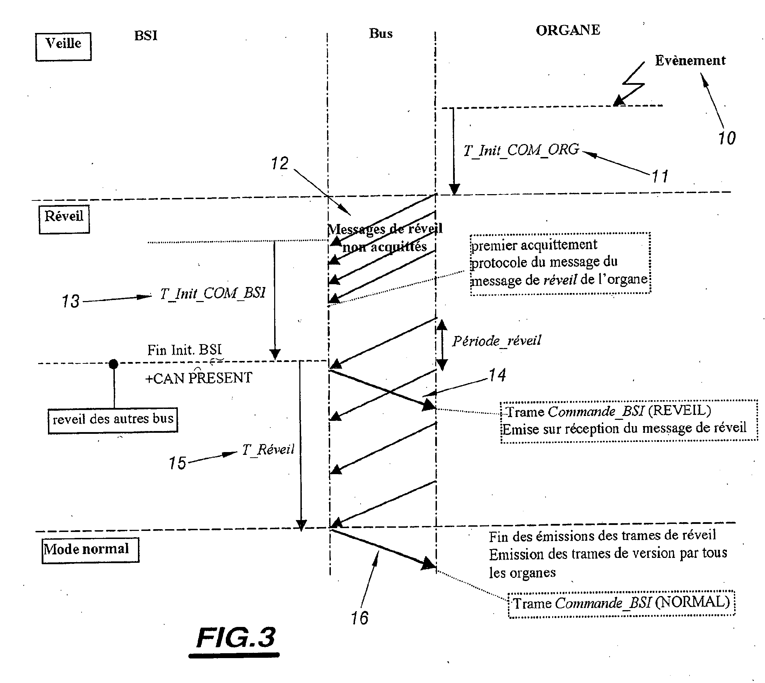

Le réveil du réseau par une station connectée à celui-ci est illustré sur la figure 3.

Sur cette figure, on a illustré les échanges entre cette station également appelée "organe " et la station de gestion de l'état du réseau également appelée "BSI", à travers le réseau multiplexé de transmission d'informations également appelé "BUS".

Le réseau et donc une station connectée à celui-ci passent d'un état de veille à un état de réveil, puis à un état de mode de fonctionnement normal comme cela est illustré.

Le déclenchement de ce réveil est assuré par la détection par l'organe d'un événement quelconque, désigné par la référence générale 10 sur cette figure 3.

La détection de cet événement 10 déclenche alors l'initialisation de l'organe qui, à la fin de sa période d'initialisation, désignée par la référence générale 11 sur cette figure, émet périodiquement sur le réseau, un message de réveil du réseau, désigné par la référence générale 12.

Ce message est par exemple reçu par la BSI qui s'initialise.

A la fin de la période d'initialisation de cette BSI, désignée par la référence générale 13 sur cette figure, cette BSI est adaptée pour émettre sur le réseau, une trame d'état de réveil, désignée par la référence générale 14, pour amener les stations dans cet état et à l'expiration d'une période de temps prédéterminée après la fin de la période d'initialisation, appelée " T réveil " sur cette figure 3 et désignée par la référence générale 15, émettre sur le réseau, une trame d'état de fonctionnement normal du réseau désignée par la référence générale 16.

On conçoit alors qu'en réponse à la détection d'une requête de réveil consécutivement à un événement quelconque, et à la fin de sa période d'initialisation, la station déclenchant le réveil du réseau, est adaptée pour émettre périodiquement sur le réseau, un message de réveil de celui-ci, de manière à déclencher l'émission par la station de gestion de l'état de réseau, à la fin de sa période d'initialisation, une trame d'état de réveil du réseau, puis à l'expiration d'une période de temps prédéterminée après la fin de la période d'initialisation de cette station de gestion, une trame d'état de fonctionnement normal du réseau.

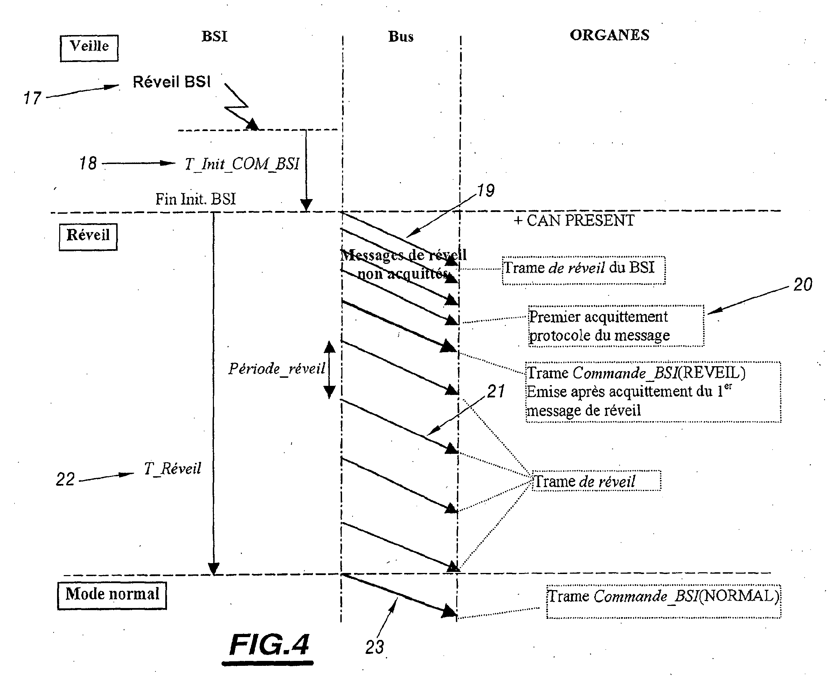

Le réveil du réseau par la BSI est illustré sur la figure 4.

Le réseau est toujours amené à passer d'un état de veille à un état de réveil, puis à un état de mode de fonctionnement normal.

Le réveil du réseau est alors provoqué par la réception et la détection d'une requête de réveil de la station BSI de gestion du réseau par celle-ci, cet événement étant désigné par la référence générale 17 sur cette figure.

Après une phase d'initialisation désignée par la référence générale 18, la station de gestion BSI émet périodiquement sur le réseau, un message de réveil du réseau désigné par la référence générale 19, jusqu'à la réception par cette station, d'un premier acquittement de protocole de ce message d'une station quelconque connectée au réseau.

Ce premier acquittement est désigné par la référence générale 20 sur cette figure.

Après la réception de ce premier acquittement, la BSI est adaptée pour émettre périodiquement sur le réseau, une trame d'état de réveil du réseau désignée par la référence générale 21 sur cette figure, jusqu'à l'expiration d'une période de temps déterminée après la première émission du message de réveil, cette période de temps étant désignée par la référence générale 22 sur cette figure et étant appelée " T réveil ".

A l'expiration de cette période de temps, la BSI émet une trame d'état de fonctionnement normal du réseau désignée par la référence générale 23 sur cette figure 4.

On conçoit donc qu'en réponse à la détection d'une requête de réveil de la station de gestion du réseau BSI et à la fin de sa période d'initialisation, cette station de gestion est adaptée pour émettre périodiquement sur le réseau un message de réveil du réseau jusqu'à la réception par cette station d'un premier acquittement de protocole de ce message, d'une station connectée à ce réseau, puis une trame d'état de réveil du réseau jusqu'à l'expiration d'une période de temps déterminée après la première émission du message de réveil, puis une trame d'état de fonctionnement normal du réseau.

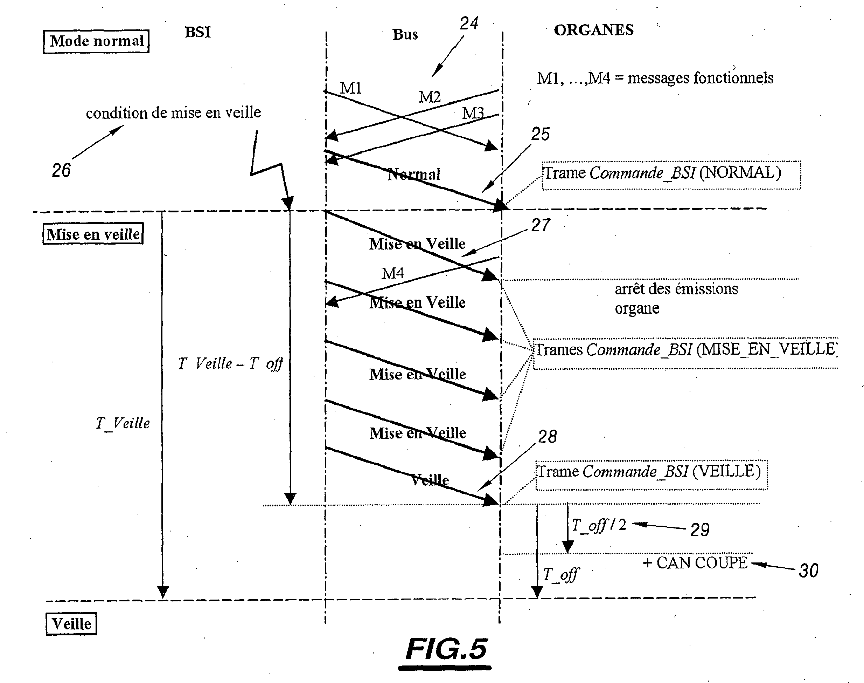

La mise en veille du réseau est illustré sur la figure 5.

Dans ce cas, le réseau passe donc d'un état de mode de fonctionnement normal à un état de mise en veille, puis à un état de veille.

En mode de fonctionnement normal, la BSI et les organes connectés au réseau, échangent des messages fonctionnels désignés par la référence générale 24 sur cette figure.

De plus, la BSI émet sur le réseau, une trame d'état de fonctionnement normal désignée par la référence générale 25.

Lorsque le BSI détecte une ou plusieurs conditions de mise en veille du réseau, telles que désignées par la référence générale 26 sur cette figure, elle émet périodiquement sur le réseau, une trame d'état de mise en veille du réseau désignée par la référence générale 27 sur cette figure, puis une trame d'état de veille désignée par la référence générale 28 sur cette figure 5 et à l'expiration d'une période de temps prédéterminée après cette trame d'état de veille, cette période de temps étant désignée par la référence générale 29 sur cette figure, elle coupe l'alimentation des stations raccordées au réseau, par exemple en coupant le plus d'alimentation de ce réseau, comme cela est illustré par la référence 30 sur cette figure, ce qui permet au réseau et donc aux stations connectées, de passer dans un état de veille.

On conçoit alors que lors de la détection des conditions de mise en veille du réseau, la station de gestion est adaptée pour émettre périodiquement sur le réseau, une trame d'état de mise en veille du réseau, puis une trame d'état de veille, et à l'expiration d'une période de temps déterminée après l'émission de cette trame d'état de veille, pour couper l'alimentation des stations raccordées au réseau.

On conçoit alors qu'une telle structure permet de garantir la synchronisation du passage dans leurs différents états de veille, de mise en veille et de fonctionnement normal des différentes stations du réseau et ce, sans risque de perte d'informations.

## Revendications

1. Système de commande de l'état de veille/réveil d'un réseau multiplexé (1) notamment de véhicule automobile, de transmission d'informations et de raccordement de stations (2,3) dont l'une (BSI) est une station de gestion de l'état du réseau et donc des autres stations, **caractérisé en ce que** la station de gestion (BSI) est adaptée pour, en réponse à la détection d'une requête de réveil (17) de la station de gestion (BSI) du réseau et à la fin de sa période d'initialisation (18), émettre périodiquement sur le réseau un message de réveil du réseau (19) jusqu'à la réception par cette station, d'un premier acquittement de protocole (20) de ce message, d'une station connectée à ce réseau, puis une trame d'état de réveil (21) du réseau jusqu'à l'expiration d'une période de temps prédéterminée (22) après la première émission du message de réveil (19), puis une trame (23) d'état de fonctionnement normal du réseau.

2. Système selon la revendication 1, **caractérisé en ce qu'**à la détection de conditions de mise en veille du réseau (26), la station de gestion (BSI) est adaptée pour émettre périodiquement sur le réseau, une trame d'état de mise en veille (27) du réseau, puis une trame d'état de veille (28) et à l'expiration d'une période de temps déterminée (29) après cette trame d'état de veille (28), pour couper l'alimentation (30) des stations raccordées au réseau.

## Claims

1. System for controlling the standby/activation state of a multiplexed network (1), in particular of a motor vehicle, for transmitting information and connecting stations (2, 3), one of which (BSI) is a management station for managing the state of the network and thereby of the other stations, **characterized in that** the management station (BSI) is designed to periodically emit on the network, in response to the detection of an activation request (17) of the management station (BSI) of the network and at the end of its initialization period (18), a network activation message (19) until this station receives a first protocol acknowledgement (20) of this message from a station connected to this network, then a network activation state frame (21), until the expiry of a predetermined period of time (22) after the first emission of the activation message (19), then a network normal operating state frame (23).

2. System according to Claim 1, **characterized in that** the management station (BSI) is designed to periodically emit on the network, upon the detection of conditions for setting the network to standby (26), a network set-to-standby state frame (27), then a standby state frame (28) and, upon expiry of a determined period of time (29) after this standby state frame (28), to switch off the power supply (30) to the stations connected to the network.

## Patentansprüche

1. System zum Steuern des Wach-/Aufweckzustandes eines multiplexierten Netzes (1), insbesondere von Kraftfahrzeugen, für die Übertragung von Informationen und die Verbindung von Stationen (2, 3), wovon eine (BSI) eine Station für das Management des Zustandes des Netzes und daher der anderen Stationen ist, **dadurch gekennzeichnet, dass** die Management-Station (BSI) ausgelegt ist, um in Reaktion auf die Erfassung einer Aufweckanforderung (17) der Management-Station (BSI) des Netzes und am Ende ihrer Initialisierungsperiode (18) periodisch eine Nachricht zum Aufwecken des Netzes (19) in das Netz zu senden, bis von dieser Station eine erste Protokollquittierung (20) dieser Nachricht von einer mit diesem Netz verbundenen Station empfangen wird, dann einen Zustandsrahmen (21) für das Aufwecken des Netzes zu senden, bis eine vorgegebene Zeitdauer (22) seit dem ersten Senden der Aufwecknachricht (19) verstrichen ist, und dann einen Zustandsrahmen (23) für den Normalbetrieb des Netzes zu senden.

2. System nach Anspruch 1, **dadurch gekennzeichnet, dass** die Management-Station (BSI) bei der Erfassung von Bedingungen für das Versetzen des Netzes (26) in den Wachzustand ausgelegt ist, um in das Netz periodisch einen Zustandsrahmen für das Versetzen des Netzes in den Wachzustand (27) auszusenden und dann einen Zustandsrahmen (28) für das Wachsein auszusenden und um nach Ablauf einer vorgegebenen Zeitdauer (29) seit diesem Wach-Zustandsrahmen (28) die Versorgung (30) der mit dem Netz verbundenen Stationen zu unterbrechen.
